# EUROPÄISCHE PATENTSCHRIFT

(11) **EP 0 436 716 B1**
(45) Veröffentlichungstag und Bekanntmachung des Hinweises auf die Patenterteilung: **11.05.1994**
(21) Anmeldenummer: 90912981.9
(22) Anmeldetag: 02.08.1990
(51) Int. Cl.: B60K 17/356, B60K 17/10

(54) **HYDROSTATISCHER ANTRIEB FÜR MEHRACHSIG ANGETRIEBENE FAHRZEUGE SOWIE VERFAHREN ZUM HYDROSTATISCHEN ANTREIBEN DERARTIGER FAHRZEUGE UND ANDERER BAUEINHEITEN**
HYDROSTATIC DRIVE FOR VEHICLES WITH MULTI-AXLE CONTROL, PROCESS FOR DRIVING SAID VEHICLES AND OTHER COMPONENTS HYDROSTATICALLY
TRANSMISSION HYDROSTATIQUE POUR VEHICULES A PLUSIEURS PONTS MOTEURS, AINSI QUE PROCEDE POUR L'ENTRAINEMENT HYDROSTATIQUE DESDITS VEHICULES ET D'AUTRES COMPOSANTS

(30) Priorität: 03.08.1989 DE 3925703
(43) Veröffentlichungstag der Anmeldung: 17.07.1991
(60) Teilanmeldung: 93107003.1
(73) Patentinhaber: Fried. Krupp AG Hoesch-Krupp, 45143 Essen (DE)
(72) Erfinder: KASPAR, Ernst, D-7932 Munderkingen (DE)
(74) Vertreter: Palgen, Peter, Dipl.-Phys.
(86) Internationale Anmeldenummer: EP9001272
(87) Internationale Veröffentlichungsnummer: WO9101899

(56) Entgegenhaltungen:
- EP-A- 347 804
- DE-A- 1 680 157
- DE-A- 3 409 566
- DE-C- 3 331 651
- GB-A- 2 119 905

## Beschreibung

Die Erfindung betrifft einen hydrostatischen Antrieb mit den Merkmalen des Oberbegriffs von Anspruch 1 sowie ein Verfahren mit den Merkmalen von Anspruch 5.

Fahrzeuge werden vor allem dann mehrachsig angetrieben, wenn sie in unwegsamem Gelände u. dgl. eingesetzt werden, wie Landfahrzeuge, Fahrzeuge für den Straßen- und Tiefbau, fahrbare Kräne u. dgl.. Durch derartige Fahrzeuge können Arbeitsmaschinen, wie Mahdrescher, Bagger, Kräne u. dgl. als Selbstfahrer mobil eingesetzt werden, so daß sie zwischen ihren Einsatzorten nicht abgeschleppt werden müssen, sondern von entsprechenden Transportfahrzeugen unabhängig operieren können.

Weil die Arbeitsmaschinen solcher Fahrzeuge ein Antriebsaggregat benötigen und hierfür aus vielerlei Gründen Hydraulikmotoren bevorzugt sind, liegt es nahe, sowohl für den Fahrantrieb als auch für den Antrieb der Arbeitsgerätschaft dasselbe Antriebsaggregat zu verwenden und dementsprechend auch für den Fahrantrieb Hydraulikmotoren einzusetzen. Da diese Fahrzeuge in der Regel sehr schwer sind und sowohl zum Überwinden erheblicher Steigungen von z. B. bis zu 60 %, einerseits, ausgelegt sein müssen und andererseits beim Überlandtransport eine ausreichende Fahrgeschwindigkeit von z. B. bis zu 62 km/h erreichen können müssen, sind an das Schaltgetriebe eines derartigen Fahrzeuges erhebliche Anforderungen gestellt, wobei die Tatsache, daß mehrere Achsen und bevorzugt sogar jedes Antriebsrad einzeln angetrieben werden muß, die Problematik noch vergrößern.

Bei Hydraulikantrieben, also Antrieben, die aus einer Hydraulikpumpe und einem damit über Leitungen verbundenen Hydraulikmotor bestehen, kann sowohl das Fördervolumen der Hydraulikpumpe als auch das Schluckvolumen des Hydromotors verstellt werden. Allerdings läßt sich zwischen maximaler und minimaler Drehzahl nur ein relativ geringes Drehzahlverhältnis, nämlich im Bereich von etwa 3 : 1 bis 3,15 : 1 verwirklichen. Werden also sowohl verstellbare Hydropumpen als auch verstellbare Hydromotoren verwendet, so kann insgesamt ein Geschwindigkeits- bzw. Drehzahlbereich und entsprechend ein Drehmomentenbereich von etwa 9 : 1 bis 10 : 1 erreicht werden.

Über die genannten Geschwindigkeits- bzw. Drehzahlbereiche hinausgehende gewünschte bzw. geforderte Drehzahlen müssen durch mechanische Schaltgetriebe verwirklicht werden. Diese bedeuten aber einen zusätzlichen Aufwand. Bei einem Fahrzeug stellt das verhältnismäßig schwere Schaltgetriebe darüber hinaus ein zusätzliches Gewicht dar, daß die Zuladefähigkeit einschränkt. Außerdem lassen sich die Antriebsdrehzahlen bei konstanter Eingangsdrehzahl nur stufenweise verändern.

Es ist auch bereits vorgeschlagen worden, bei einem hydrostatischen Fahrzeugantrieb die Getriebeanordnung als hydraulisches Schaltgetriebe auszulegen. Ein solcher, gattungsgemäßer Antrieb ist aus der DE 34 09 566 A1 bekannt. Bei diesen bekannten Antrieb können z. B. zwei Hydraukikpumpen einzeln oder in Parallelschaltung betrieben werden. Diese beiden Hydraukikpumpen fördern in einen gemeinsamen Förderstrang, an den ein zuschaltbarer Hydraukikölspeicher angeschlossen ist. Über den Hydraulikstrang versorgen die Hydraukikpumpen u. ggf. der Hydraulikölspeicher zwei parallel geschaltete Hydromotoren, von denen der eine oder der andere oder beide gemeinsam die Antriebsleistung des Fahrzeuges erbringen können. Die beiden Hydraulikpumpen und die beiden Hydromotoren können mittels Schaltkupplungen unabhängig voneinander zu- oder abgeschaltet werden. Der Zweck dieses bekannten Antriebs besteht darin, für Beschleunigungsphasen zusätzliche Antriebsleistung in Form von in dem Hydraulikölspeicher gespeichertem, auf Arbeitsdruck sich befindendem Hydrauliköl bereit zu stellen. Dies geschieht dadurch, daß in Verzögerungsphasen die Hydraulikpumpen weiterarbeiten und das Hydrauliköl anstatt in die Hydromotoren in den Hydraulikölspeicher fördern. Die Fähigkeit dieses bekannten Antriebes, mehrere hydraulisch arbeitende Schaltstufen zu realisieren, beruht also im wesentlichen auf dem Vorhandenein des Zwischenspeichers sowie auf dem Vorhandensein mehrerer, einzeln zuschaltbarer Hydraulikpumpen. Bei diesem bekannten Antrieb wird zur Beschleunigung des Fahrzeuges zunächst eine der beiden Hydromotoren angekuppelt und sodann von 0 bis zum maximalen Schluckvolumen ausgeschwenkt. Wird das Fahrpedal weiter betätigt, so erfolgt das Einrücken der Schaltkupplung des zweiten Hydromotors, wobei gleichzeitig das Schluckvolumen des ersten Hydromotors wieder auf 0 eingestellt wird, worauf dann bei anschließender Betätigung des Fahrpedals das Schluckvolumen erneut von 0 ausgehend bis auf den maximalen Wert erhöht wird, bis bei der maximal möglichen Stellung des Fahrpedals beide Hydromotoren mit maximalen Schluckvolumen arbeiten. Diese Betriebsweise erfordert also für Beschleunigungsvorgänge variable Hydraulikölmengen je Zeiteinheit, was entweder das Vorhandensein besonders leistungsfähiger und für den Normalbetrieb überdimensionierter Hydraulikpumpen oder die Verwednung eines gesondert zu- und abschaltbaren Hydraulikölspreichers erfordert. Noch schwerwiegender ist der Nachteil, daß mit diesem bekannten Antrieb es ohne das Vorhandensein zusätzlicher Schaltgetriebe nicht möglich ist, den gesamten Leistungs- und Geschwindigkeitsbereich abzudecken, der von den hydraulisch angetriebenen Fahrzeugen im allgemeinen gefordert wird.

Davon ausgehend liegt der Erfindung die Aufgabe zugrunde, einen hydrostatischen Antrieb mit den Gattungsmerkmalen des Anspruchs 1 zu schaffen, der als rein hydrostatische Antriebs- und Schaltanordnung in der Lage ist, bei vergleichsweise geringem Gewicht des Antriebes dem Fahrzeug sowohl extreme Steigfähigkeit, z. B. bis 60 % Steigung, einerseits und relativ hohe Geschwindigkeiten beim Überlandverkehr, von z. B. bis zu 62 km/h zu ermöglichen. Diese Aufgabe wird durch den hydrostatischen Antriebmit den Merkmalen des Anspruchs 1 gelöst. Die Erfindung basiert also auf dem Grundgedanken, bei einem hydrostatischen Antrieb für mehrachsig angetriebene Fahrzeuge mit mindestens einer Hydraulikquelle und mindestens zwei parallel geschalteten Hydromotoren oder Gruppen von Hydromotoren, die durch eine mechanische Verbindung und insbesondere ein Übersetzungsgetriebe mit der jeweiligen anzutreibenen Achse oder anzutreibenen Rad verbunden sind und bei dem zumindest ein Teil der Hydromotoren von dem angetriebenen Rad/Achse abkuppelbar ist, das Produkt aus der Drehmomentkonstante jedes Hydromotors und dem Übersetzungsverhältnis der zugehörenden mechanischen Verbindung für jede der angetriebenen Achsen anders zu wählen, wobei eine angetriebene Achse auch aus Teilachsen, wie bei Tandemachsen einerseits und Halbachsen andererseits bestehen kann.

Durch die Erfindung wird unter anderem erreicht, daß auf ein mechanisches Schaltgetriebe verzichtet werden kann, daß gleichwohl hohe Steigfähigkeiten einerseits und relativ hohe Fahrgeschwindigkeit andererseits realisierbar sind und daß gleichwohl relativ kleine und damit preiswerte und leichte Hydromotoren verwendet werden können.

Als besonders wirkungsvoll und komfortabel hat es sich erwiesen, wenn zumindest bei einem Teil der Hydromotoren das Schluckvolumen, insbesondere bis auf Null, vorzugsweise stufenlos, während des Fahrbetriebes veränderbar ist (Anspruch 2).

Wenn der Hydraulikstrom der mindestens einen Hydraulikquelle, vorzugsweise stufenlos, während der Fahrt veränderbar ist, wird vor allem das Anfahren des Fahrzeuges spürbar erleichtert. Während des Fahrens und Schaltens, kann diese Veränderbarkeit des Hydraulikstromes zwar ebenfalls benutzt werden, doch ist dies in der Regel nicht erforderlich und in vielen Fällen auch nicht einmal erwünscht.

Ein, ansich bekannter, Einzelradantrieb (nach Anspruch 4) wirkt sich bei dem erfindungsgemäßen hydrostatischen Antrieb ganz besonders vorteilhaft aus, da bei hydraulischen Einzelradantrieben ein integriertes Untersetzungsgetriebe ohnehin gebräuchlich ist und es daher keinen spürbaren Mehraufwand bedeutet, für die Räder der einzelnen Achsen unterschiedliche Getriebeuntersetzungsverhältnisse zu realisieren. Hier hinzu kommt der, bekannte, Vorteil, daß bei hydrostatischen Einzelradantrieben ein Ausgleichsgetriebe zwischen den Rädern einer Achse entfallen kann. Grundsätzlich ist es auch möglich und im Sinne der Erfindung, wenn bei der Verwendung von Einzelradantrieben für verschiedene angetriebene Räder desselben Fahrzeuges unterschiedliche Produkte k x i, insbesondere bei konstantem k vorzusehen, und zwar unabhängig davon, ob die betreffenden angetriebenen Rädern zur selben oder zu verschiedenen Fahrzeugachsen gehören. So ist es im Sinne der Erfindung, bei einem Fahrzeug, bei dem z. B. vier hydrostatische Einzelradantriebe vorgesehen sind, zwei, oder drei oder vier verschiedene Produkte k x i zu realisieren - unabhängig davon, welchen der Achsen des Fahrzeuges diese betreffenden angetriebenen Räder zugeordnet sind. Es ist eine besonderer Vorteil der Erfindung, daß auch für die Erbringung relativ hoher Antriebsmomente relativ kleine und dann entsprechend stark untersetzte Hydromotoren verwendet werden können, ohne daß die Grenzdrehzahlen dieser Motoren erreicht oder gar überschritten werden müssen. Es hat sich nämlich gezeigt, daß trotz der unterschiedlichen Antriebsmomente an den einzelnen angetriebenen Rädern bzw. Achsen eine außerordentlich wirkungsvolle Momentenaddition auftritt, so daß auch die angetriebenen Räder/Achsen mit relativ kleinen Produkt k x i in wirkunsvoller Weise ihren Beitrag am geforderten Gesamtantriebsmoment liefern. Wenn z. B. bei einem dreiachsig mit Einzelradantrieben angetriebenen Fahrzeug mit, dementsprechend, sechs, vorzugsweise gleichen, Hydromotoren die Untersetzungsverhältnisse für die drei Achsen 1 : 12, 1 : 24 und 1 : 36 sind, so sind sowohl hohe Antriebsmomente für extreme Steigfähigkeit als auch hohe Endgeschwindigkeiten für den Straßenverkehr von z. B. 62 km/h realisierbar, wobei die Abkuppelbarkeit der Hydromotoren mit besonders hoher Getriebeuntersetzung diese Hydromotoren bei höheren Fahrgeschwindigkeiten vor dem Erreichen bzw. Überschreiten der Grenzdrehzahlen schützt. Wie ansich bekannt, wird man abgekuppelte Motoren durch entsprechende Ventilschaltungen auch antriebsseitig abkuppeln, indem man sie von der Förderleitung der Antriebsflüssigkeit fluidisch abkuppelt.

Der größtmögliche Nutzen des erfindungsgemäßen Antriebes wird dann erreicht, wenn er derart betreibbar ist bzw. betrieben wird, daß bei hoher Lastanforderung und (zunächst) geringem Geschwindigkeitsbedarf zunächst alle Hydromotoren an die Last angekuppelt sind und, falls ihr Schluckvolumen veränderbar ist, mit ihrem jeweils maximalen Schluckvolumen betrieben werden, wobei, falls der Hydraulikstrom der zumindestens einen Hydraulikquelle veränderbar ist, diese Veränderung im wesentlichen stufenlos erfolgt und daß bei zunehmenden Geschwindigkeitsbedarf und abnehmenden Lastbedarf zunächst das Schluckvolumen desjenigen Hydromotors, in dessen Zweig das Produkt k x i am größten ist, vorzugsweise stufenlos und insbesondere auf Null, gedrosselt wird und der dadurch verfügbar werdende Hydraulikstrom dem oder den Hydraulikmotor/en mit dem/den jeweils kleineren zugehörigen Produkt/en k x i zusätzlich zugeführt wird, wobei bei weiter zunehmenden Geschwindigkeitsbedarf mit den noch ungedrosselten Hydromotoren entsprechend verfahren wird (Anspruch 5). Bei dieser bevorzugten Auslegung des erfindungsgemäßen Antriebes erfolgt das Auskuppeln eines Hydromotors bevorzugt dann, nachdem sein Schluckvolumen auf Null heruntergedrosselt worden ist.

Die hydrostatischen Antriebe können - wie ansich bekannt - einen geschlossenen oder offenen Kreislauf aufweisen.

Der Deutlichkeit halber sei darauf hingewiesen, daß, im Sinne der Erfindung, diejenige, im allgemeinen als Getriebe ausgebildete, mechanische Verbindung die "größere" Übersetzung hat, die - bei gleichem eingangsseitigen Antriebsmoment- ein größeres Abtriebsmoment abgibt. So wird z. B. die Übersetzung 1 : 36 als größer angesehen als die Übersetzung 1 : 15. Als Maß für die "Größe" einer Übersetzung wird also deren - auf eins bezogene - Nenner und nicht etwa der Quotient selber angesehen.

Ein erfindungsgemäßer hydrostatischer Antrieb arbeitet bevorzugt also folgerdermaßen:

Bei der größten geforderten Vortriebskraft bzw. dem größten Antriebsmoment für die Baueinheit - Anfahren, Fahren auf der größmöglichen geforderten Steigung, Heben einer großen Last - werden alle Hydromotoren mit Druckmedium versorgt, wobei bei den verstellbaren Hydromotoren jeweils das größte Schluckvolumen eingestellt ist. Dementsprechend ergibt sich eine große Vortriebskraft bei geringer Gesamtgeschwindigkeit bzw. bei rotierenden Baueinheiten ein großes Antriebsmoment bei geringer Winkelgeschwinkigkeit. Zur Erzeugung der größten erforderlichen Vortriebskraft bzw. des größten Drehmoments werden also alle hydraulischen Antriebsmotoren herangezogen, wobei der Hauptanteil von dem größten bzw. den größten Motoren erbracht wird, der bzw. die mit dem größten Übersetzungsverhältnis bzw. der größten Drehmomentenkonstante wirken. Die Drehzahlen Hydromotoren ergeben sich jeweils aus der Gesamtgeschwindigkeit bzw. Winkelgeschwindigkeit und der jeweiligen Getriebeübersetnung.Entsprechend den Drehzahlen und dem maximalen Schluckvolumen der einzelnen Hydromotoren ergeben sich die hydraulischen Teilströme durch die einzelnen Hydromotoren.

Wenn die erforderliche Vortriebskraft bzw. das Antriebsmoment für die Baueinheit sinkt - z.B. beim Nachlassen der Anfahrbeschleunigung oder beim Nachlassen einer Steigung - kann der Hydromotor bzw. können die Hydromotoren, die in dem Zweig mit dem größten Produkt, gebildet aus der Drehmomentenkonstante und dem Übersetzungsverhältnis, arbeiten, durch zugehörige Kupplungen von der gesamten Baueinheit antriebsmäßig getrennt bzs. abgeschaltet werden, nachdem sein bzw. ihr Schluckvolumen auf Null verstellt worden ist und die Baueinheit somit insgesamt schneller bewegt bzw. gedreht wird. Hierdurch wird ein Überdrehen dieses bzw. dieser Hydromotoren verhindert.

Der bzw. die antriebsmäßig abgeschalteten Hydromotoren sind vorteilhafterweise durch Ventile von der Druckversorgung (Hydropumpe) auch hydraulisch trennbar, um einen besseren Wirkungsgrad zu erreichen. Der Förderstrom der Hydropumpe fließt nunmehr nur noch durch den Hydromotor bzw. die Hydromotoren des bzw. der Zweige mit einem entsprechend kleineren bzw. dem kleinsten Produkt (Drehmomentenkonstante x Übersetzungsverhältnis).

Die Bewegungs- bzw. Drehgeschwindigkeit kann dadurch weiter erhöht werden, daß auch der bzw. die Hydromotoren des bzw. der Zweige mit dem kleineren bzw. kleinsten Produkt (Drehmomentenkonstante x Übersetzungsverhältnis) als Verstellmotor ausgebildet sind und daß deren Schluckvolumen verringert wird.

Bei einem mehrachsigen Fahrgestell mit Rädern weist jede angetriebene Achse vorteilhafterweise ein gesondertes Produkt (Drehmomentenkonstante x Übersetzungsverhältnis) auf. Unter "Achsen" werden dabei alle Räder verstanden, die bei Geradeausfahrt eine gemeinsame Drehachse aufweisen.

Vorteilhafterweise wird jedem Rad in an sich bekannter Weise ein gesonderter Hydromotor zugeordnet, wodurch sich eine große Bodenfreiheit zwischen den Rädern erzielen läßt.

Zur Vermeidung des Durchdrehens einzelner Räder auf glattem oder nicht festem Untergrund wird vorgeschlagen, daß bei einer als mehrachsiges Fahrgestell mit Rädern ausgebildeten Baueinheit einen Stromteiler, insbesondere ein Stromregelventil mit einer der Anzahl der Hydromotoren entsprechenden Anzahl von Durchlässen, vorgesehen ist der bzw. das zwischen die Hydraulikquelle und die Hydromotoren zuschaltbar ist oder daß jedem Rad ein Drehzahlgeber zugeordnet ist, der an eine zentrale Antischlupfregelung angeschlossen ist.

Vorteilhafterweise kann die Hydraulikquelle zur Versorgung der Hydromotoren über eine Ventilanordnung auch mit anderen Verbrauchern, z.B. dem Hub- und dem Drehwerk eines Fahrzeugkranes, verbindbar sein.

Ausführungsbeispiele der Erfindung sind in der Zeichnung schematisch bzw. mit Symbolen dargestellt und werden im folgenden näher beschrieben. Es zeigen :
- Fig. 1: die Radanordnung eines 4-achsigen Fahrzeuges mit hydrostatischem Antrieb, und
- Fig. 2: die Radanordnung eines zweiachsigen Fahrzeugs mit einem Stromregelventil.

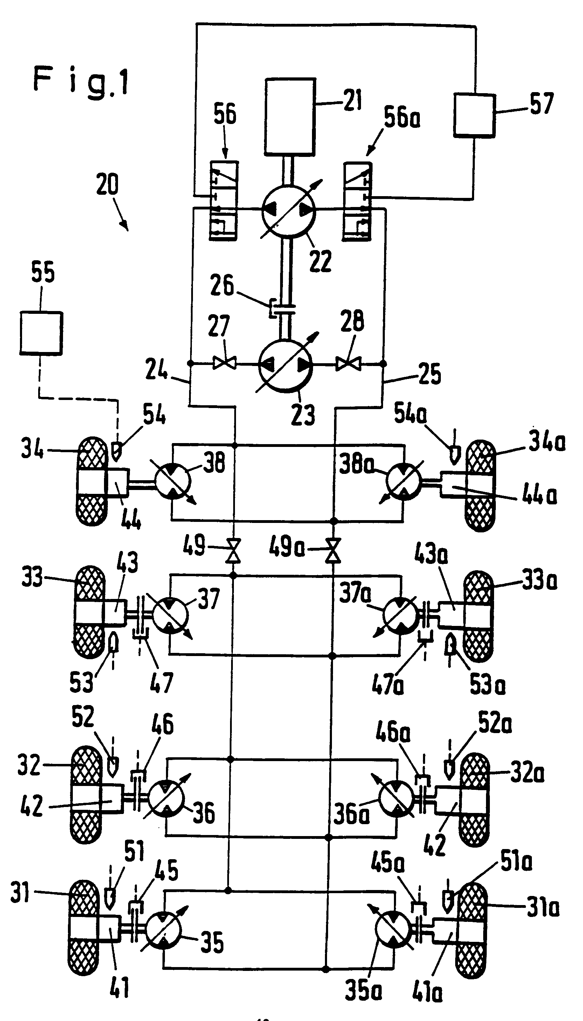

In Fig. 1 ist der hydrostatische Antrieb eines vierachsigen Fahrzeugkranes 20 dargestellt. Ein Dieselmotor 21 treibt zwei Hydropumpen 22, 23 jeweils mit veränderlichem Verdrängungsvolumen und zwei Stromrichtungen an. Beide Hydropumpen sind an einen gemeinsamen geschlossenen Kreislauf mit den Leitungen 24, 25 angeschlossen. Die Verstellung der Hydropumpen kann gemeinsam und synchron erfolgen. Die eine Hydropumpe (23) kann durch eine Trennkupplung 26 von dem Dieselmotor 21 und durch Absperrventile 27, 28 von dem hydraulischen Kreislauf 24, 25 getrennt werden.

Der hydrostatische Antrieb weist für jedes Rad 31, 31a bis 34, 34a der vier Achsen je einen, insgesamt also acht Hydromotoren 35, 35a bis 38, 38a mit veränderlichem Schluckvolumen und zwei Stromrichtungen auf. Jeder Hydromotor ist mit dem zugehörigen Rad (31, ...) über ein Getriebe 41, 41a bis 44, 44a verbunden. Dabei können die Getriebe als Planetengetriebe beispielsweise entsprechend der DE-OS 27 44 936 ausgebildet sein. Die Getriebe einer Aches, z.B. 42, 42a, weisen jeweils gleiche Übersetzungsverhältnisse auf, von Achse zu Achse sind die Übersetzungsverhältnisse jedoch verschieden. So beträgt das Übersetzungsverhältnis i41 der Getriebe 41, 41a der ersten (untersten) Achse beispielsweise 1:36, des Übersetzungvernältnis i42 der zweiten Achse 1:26, das der dritten Achse 1:20 und das Übersetzungsverhältnis der letzten (obersten) Aches 1:15.

Alle Getriebe 41, 41a bis 43, 43a, deren Überssetzungsverhältnis i41 bis i43 größer ist als das kleinste Übersetzungsverhältnis i44, sind über je eine Trennkupplung 45, 45a bis 47, 47a mit dem zugehörigen Hydromotor 35, 35a bis 37, 37a verbunden.
Alle Hydromotoren 35, 35a bis 38, 38a sind parallel geschaltet und jeweils über Zweigleitungen mit den Leitungen 24, 25 verbunden. Zwischen den Zweigleitungen für die Hydromotoren 38, 38a der letzten Achse und den Zweigleitungen für die Hydromotoren 37, 37a der dritten Achse sind Absperrventile 49, 49a in den Leitungen 24, 25 angeordnet. Zusatzlich können auch die Hydromotoren jeder Achse durcch entsprechende Absperrventile separat abgeschaltet werden.

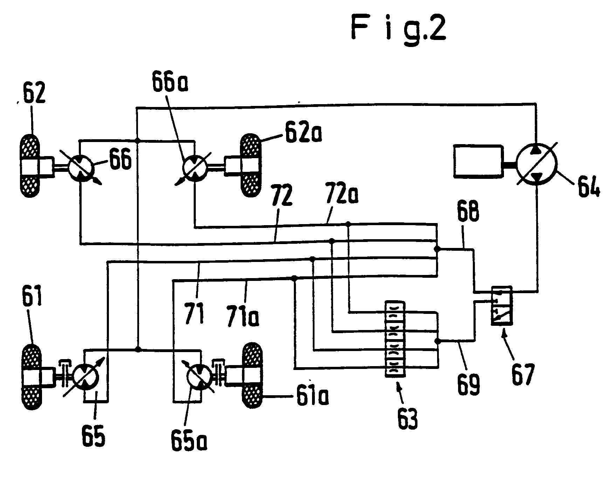

Jedes Rad 31, 31a bis 34, 34a ist mit einem gesonderten Drehzahlgeber 51, 51a bis 54, 54a verbunden, die alle an eine zentrale Antischlupfregelung 55 angeschlossen sind (in Fig. 2 nur fur den Drehzahlgeber 54 dargestellt).

Beim Anfahren des Fahrzeugs auf maximaler Steigung sind die Verdrängungsvolumina der Hydropumpen 22, 23 auf Null und das Schluckvolumen aller Hydromotoren 35, 35a bis 38, 38a auf das Maximum eingestellt. Alle Trennkupplungen 45, 45a bis 47, 47a sind geschlossen bzw. im Eingriff. Der Dieselmotor 21 treibt die Hydropumpen 22, 23 mit konstanter Drehzahl an.

Unter Berücksichtigung der Dieselmotorcharakteristik wird das Verdrängungsvolumen der Hydropumpen 22,23 stufenlos bis zum Maximum verstellt, so daß sich der Förderstrom Q durch die Leitungen 24, 25 von Null bis zu einem möglichen Maximum Qmax einstellt. Durch den Reibschluß zwischen den Rädern und dem Untergrund stellt sich dabei bei Geradeausfahrt bei allen Rädern eine gemeinsame Drehzahl und damit fur das Fahrzeug eine Geschwindigkeit w1 ein.

Bedingt durch die verschiedenen Übersetzungsverhaltnisse i41 bis i44 der Achsen haben die Hydromotoren der verschiedenen Achsen unterschiedliche Drehzahlen. Entsprechend verschieden sind die auf die Räder jeder Achse ausgeübten Drehmomente.

Wenn der Bedarf an Vortriebskraft sinkt, z.B. bei einem Nachlassen der Steigung, wird das Schluckvolumen der beiden ersten Verstellmotoren 35, 35a synchron stufenlos reduziert bis deren Schluckvolumen Null ist. In diesem Moment werden die Trennkupplungen 45, 45a gelöst bzw. geöffnet. Durch den beschriebenen Verstell- bzw. Schaltvorgang erhöht sich die Geschwindigkeit des Fahrzeugs auf w2.

Bei weiterem Absinken der erforderlichen Vortriebskraft wird - weiterhin bei voll ausgesteuerten Hydropumpen 22, 23 - zunächst das Schluckvolumen der beiden Verstellmotoren 36, 36a stufenlos synchron bis Null reduziert und die Trennkupplungen 46, 46a gelöst und anschließend das Schluckvolumen der beiden Hydromotoren 37, 37a stufenlos synchron bis Null reduziert und die Trennkupplungen 47, 47a gelöst. Dabei erhöht sich die Geschwindigkeit
des Fahrzeugs auf w3 bzw. w4. Die Absperrventile 49, 49 werden geschlossen, um die Hydromotoren 35, 35a bis 37, 37a auch hydraulisch abzukoppeln, um einen besseren Wirkungsgrad zu erreichen.

Zur Erzielung der maximalen Fahrzeuggeschwindigkeit wmax wird das Schluckvolumen der beiden letzten Hydromotoren 38, 38a bis auf ein technisches bzw. wirtschaftliches Minimum reduziert.

Alternativ können auch alle Hydromotoren gleichzeitig zurückgeschwenkt werden. Es sind auch weitere Kombinationen zum Hochfahren der Drehzahl möglich.

Da sowohl die Hydropumpen als auch die Hydromotoren für zwei Stromrichtungen ausgelegt sind, gilt für das Ruckwärtsfahren des Fahrzeugs entsprechendes.

Bei einer Kurvenfahrt des Fahrzeugs bestimmen sich die Drehzahlen der einzelnen Räder durch den Reibschluß zwischen den Rädern und dem Untergrund aus der Fahrzeuggeschwindigkeit und dem Kurvenradius. Die Teilströme durch die links und rechts des Fahrzeugs angeordneten Hydromotoren ergeben sich entsprechend den gegebenen Drehzahlen der Räder.

Mit Hilfe der den einzelnen Rädern 31, 31a bis 34, 34a zugeordneten Drehzahlgebern 51, 51a bis 54, 54a und der zentralen Antischlupfregelung 55 ist es möglich, die Drehzahl jedes einzelnen Rades mit dem Durchschnittswert der Drehzahlen aller Räder zu vergleichen. Dreht ein Rad durch, weil es z.B. auf Glatteis oder einem nicht festen Untergrund steht, so kann das Schluckvolumen des entsprechenden Hydromotors so lange reduziert werden, bis eine Drehzahlangleichung an die ubrigen Drehzahlen herbeigeführt ist.

Zwischen dem Hydromotor 22 und den Leitungen 24, 25 ist je ein 3/3-Wegeventil 56, 56a angeordnet, um auch andere Verbraucher 57, z.B. den Seilwindenantrieb und/oder den Drehantrieb des sog. Oberwagens des Fahrzeugkrans 20, mit Druckmedium versorgen zu können.

Für den reinen Fahrbetrieb befinden sich die Ventile 56, 56a in der dargestellten Schaltstellung und die Trennkupplung 26 ist geschlossen, so daß die Hydromotoren 35, 35a bis 38, 38a durch beide Hydropumpen 22, 23 mit Druckmedium versorgt werden. Bei den anderen beiden Schaltstellungen können wahlweise ausschließlich der bzw. die Verbraucher 57 oder der bzw. die Verbraucher 57 und die Hydromotoren 35, ... von beiden Hydropumpen 22, 23 oder - bei geöffneter Trennkuoplung 26 und geschlossenen Ventilen 27, 28 - von der Hydropumpe 22 alleine mit Druckmedium versorgt werden.

Obwohl bei dem beschriebenen Ausführungsbeispiel mit einzeln angetriebenen Rädern eine große Bodenfreiheit zwischen den Rädern erzielbar ist, kann das Fahrzeug auch durch je einen Hydromotor über ein Differentialgetriebe achsweise angetrieben werden. Dabei können die unterschiedlichen Getriebeubersetzungen am Differentialgetriebe und/oder in den Radnabengetrieben verwirklicht werden.

Zur Verhinderung des Durchdrehens einzelner Räder 61, 61a, 62, 62a ist bei dem Ausführungsbeispiel gemäß Fig. 2 bei einem zweiachsigen Fahrzeug ein zuschaltbares Stromregelventil 63 mit vier Durchlässen mit jeweils einstellbarem Ausgangsstrom (entsprechend Ziff. 7.5.2.1 bzw. 7.5.2.3 DIN ISO 1219 (8/78)) zwischen der Hydropumpe 64 und den Hydromotoren 65, 65a, 66, 66a und ein 3/2-Wegeventil 67 vorgesehen.

Bei der dargestellten Schaltstellung des 3/2-Wegeventils 67 ist die Hydropumpe 64 unmittelbar und bei vollem Leitungsquerschnitt über die Leitung 68 mit den Leitungen 71, 71a, 72, 72a zu den Hydromotoren 65, 65a, 66, 66a verbunden. Der Förderstrom durch die einzelnen Leitungen kann sich entsprechend den gegebenen Verhältnissen frei und ggf. unterschiedlich einstellen. Soll das Durchdrehen eines Rades verhindert werden, wird das Ventil 67 in die als untere Schaltstellung dargestellte Stellung geschaltet und der Hydraulikstrom wird den Leitungen 71, 71a, 72, 72a über die Leitung 69 und das Stromregelventil 63 zugeleitet. Der jeweils konstante Durchfluß durch die Durchlässe des Stromregelventils 63 ist unter Berücksichtigung des Schluckvolumens des zugehörigen Hydromotors 65, 65a, 66, 66a und der jeweiligen Übersetzung eingestellt. Vor dem Umschalten des Ventils 67 sind die Hydromotoren jeweils auf ihr größtes Schluckvolumen einzustellen.

## Patentansprüche

1. Hydrostatischer Antrieb für mehrachsig angetriebene Fahrzeuge mit
- mindestens einer Hydraulikquelle,
- mindestens zwei parallel geschalteten Hydromotoren oder Gruppen von Hydromotoren sowie
- einer mechanischen Verbindung mit einem Übersetzungsverhältnis (i) zwischen jedem Hydromotor und dem/den von dem/den jeweiligen Hydromotor/Hydromotoren angetriebenen Rad/ Rädern,
bei dem
- jeder der Hydromotoren bzw. jede der Gruppen von Hydromotoren jeweils eines oder mehrere der Räder antreibt/antreiben,
- zumindest ein Teil der angetriebenen Räder vom dem/den sie antreibenden Hydromotor/Hydromotoren abkuppelbar ist und
- die Drehmomentkonstanten (k) der das Fahrzeug antreibenden Hydromotoren (35, 35a; 36, 36a; 37, 37a; 38, 38a; 65, 65a; 66, 66a bei maximalem Schluckvolumen im wesentlichen gleich sind, wobei die Drehmomentkonstante (k) dem abgegebenen Drehmoment an der Welle des Hydromotors bei maximalem Schluckvolumen und einer Druckdifferenz von 1 bar entspricht,
**dadurch gekennzeichnet,**
daß die Übersetzungsverhältnisse (i41, i41a; i42, i42a; i43, i43a; i44, i44a) der mechanischen Verbindungen (31, 41, 31a, 41a; 32, 42, 32a, 42a; 33, 43, 33a, 43a; 34, 44, 34a, 44a) also unter Berücksichtigung der Raddurchmesser, für zumindest einen Teil der angetriebenen Räder voneinander verschieden sind, so daß zumindest für diesen Teil der angetriebenen Räder das jeweilige Produkt aus der Drehmomentkonstante jedes Hydromotors oder jeder Gruppe von Hydromotoren und dem Übersetzungsverhältnis der zugehörenden mechanischen Verbindung (k x i) ein anderes ist.

2. Hydrostatischer Antrieb nach Anspruch 1, dadurch gekennzeichnet, daß zumindest bei einem Teil der Hydromotoren das Schluckvolumen, insbesondere bis auf Null, vorzugsweise stufenlos, während des Fahrbetriebes veränderbar ist.

3. Hydrostatischer Antrieb nach Anspruch 1 oder 2, dadurch gekennzeichnet, daß der Hydraulikstrom der mindestens einen Hydraulikquelle (22, 23; 64), vorzugsweise stufenlos, während des Fahrbetriebes veränderbar ist.

4. Hydrostatischer Antrieb nach einem der Ansprüche 1 bis 3, dadurch gekennzeichnet, daß dem Rad bzw. den Rädern jeder Seite einer angetriebenen Achse ein gesonderter Hydromotor zugeordnet ist.

5. Verfahren zum hydrostatischen Antreiben von mehrachsig anzutreibenden Fahrzeugen nach einem der Ansprüche 1 bis 4, bei denen unter Verwendung mindestens einer Hydraulikquelle mindestens zwei Hydromotoren parallel geschaltet angetrieben werden und die Hydromotoren mit den Antriebsrädern des Fahrzeuges mechanisch verbunden sind und zumindest ein Teil der Hydromotoren von den Antriebsrädern abkuppelbar ist, und bei dem, zumindest für einen Teil der Hydromotoren und der zugehörigen mechanischen Verbindungen mit einem Übersetzungsverhältnis (i) das jeweilige Produkt aus der Drehmomentkonstante jedes Hydromoters oder jeder Gruppe von Hydromotoren und dem Übersetzungsverhältnis der zugehörenden mechanischen Verbindung (k x i) ein anderes ist, wobei die Drehmomentkonstante (k) dem abgegebenen Drehmoment an der Welle des Hydromotors bei maximalem Schluckvolumen und einer Druckdifferenz von 1 bar entspricht,
**dadurch gekennzeichnet,**
daß bei hoher Lastanforderung und geringem Geschwindigkeitsbedarf zunächst alle Hydromotoren an die Last angekuppelt sind und mit ihrem jeweils maximalen Schluckvolumen betrieben werden, wobei der Hydraulikstrom der mindestens einen Hydraulikquelle im wesentlichen stufenlos veränderbar ist,
daß bei zunehmenenden Geschwindigkeitsbedarf und abnehmenden Lastbedarf zunächst das Schluckvolumen desjenigen Hydromotors, im wesentlichen stufenlos und ggf. auf Null, gedrosselt wird, in dessen Zweig das Produkt k x i am größten ist und der dadurch verfügbar werdende Hydraulikstrom dem oder den Hydraulikmotor/en mit dem/den jeweils kleineren zugehörigen Produkt/en k x i zugeführt wird und
daß bei weiter zunehmenden Geschwindigkeitsbedarf mit den noch ungedrosselten Hydromotoren entsprechend verfahren wird.

## Claims

1. Hydrostatic drive for vehicles with multi-axle control having
- at least one hydraulic source,
- at least two parallel hydromotors or groups of hydromotors and
- a mechanical connection with a transmission ratio (i) between each hydromotor and the wheel/wheels driven by the respective hydromotor/hydromotors,
wherein
- each of the hydromotors or each group of the hydromotors drives/drive one or several of the wheels,
- at least some of the driven wheels may be detached from the hydromotor/hydromotors driving them, and
- the torque constants (k) of the hydromotors (35, 35a; 36, 36a; 37, 37a; 38, 38a; 65, 65a; 66, 66a) driving the vehicle are essentially equal at maximum absorption volume, said torque constant (k) corresponding to the torque transferred at the shaft of the hydromotor at maximum absorption volume and to a pressure difference of 1 bar,
characterised in that
taking into account the wheel diameter, the transmission ratios (i41, i41a; i42, i42a; i43, i43a; i44, i44a) of the mechanical connections (31, 41, 31a, 41a; 32, 42, 32a, 42a; 33, 43, 33a, 43a; 34, 44, 34a, 44a) differ from one another for at least some of the driven wheels, so that at least for these driven wheels, the respective product of the torque constant of each hydromotor or each group of hydromotors and the transmission ratio of the corresponding mechanical connection (k x i) is different.

2. Hydrostatic drive according to Claim 1, characterised in that at least in some of the hydromotors the absorption volume may preferably be continuously changed during travel, in particular down to zero.

3. Hydrostatic drive according to Claim 1 or 2, characterised in that the hydraulic flow of the at least one hydraulic source (22, 23; 64) may be changed, preferably continuously, during travel.

4. Hydrostatic drive according to one of Claims 1 to 3, characterised in that a separate hydromotor is allocated to the wheel or wheels of each side of a driven axle.

5. Process for the hydrostatic drive of vehicles with multi-axle control according to one of Claims 1 to 4, wherein at least two parallel hydromotors are driven using at least one hydraulic source, and the hydromotors are mechanically connected to the drive wheels of the vehicle and at least some of the hydromotors may be detached from the drive wheels, and wherein for at least some of the hydromotors and the corresponding mechanical connections with a transmission ration (i), the respective product of the torque constant of each hydromotor or each group of hydromotors and the transmission ratio of the corresponding mechanical connection (k x i) is different, said torque constant (k) corresponding to the torque transferred at the shaft of the hydromotor at maximum absorption volume and to a pressure difference of 1 bar, characterised in that in the case of high load requirement and low speed requirement, all hydromotors are firstly coupled to the load and operated at their respective maximum absorption volumes, whereby the hydraulic flow of the at least one hydraulic source may be changed essentially continuously; that in the case of increasing speed requirement and decreasing load requirement, the absorption volume of that hydromotor is firstly throttled essentially continuously and optionally to zero, in the branch of which the product k x i is at its highest and the hydraulic flow made available thereby is fed to the hydraulic motor/motors with the respectively lower corresponding product/products k x i, and that in the case of further increasing speed requirement, the process continues accordingly while the hydromotors are not throttled.

## Revendications

1. Transmission hydrostatique pour véhicules à plusieurs ponts moteurs, comportant
- au moins une source d'énergie hydraulique,
- au moins deux moteurs hydrauliques ou groupes de moteurs hydrauliques branchés en parallèle, ainsi que
- une liaison mécanique comportant un rapport de transmission (i) entre chaque moteur hydraulique et la ou les roues entraînées par le ou les moteurs hydrauliques concernés,
pour laquelle
- chacun des moteurs hydrauliques, ou chacun des groupes de moteurs hydrauliques, entraîne l'une ou plusieurs des roues,
- au moins une partie des roues entraînées peut être découplée du ou des moteurs hydrauliques qui les entraînent,
- les constantes (k) de couple des moteurs hydrauliques (35, 35a; 36, 36a; 37, 37a; 38, 38a; 65, 65a; 66, 66a) entraînant le véhicule, pour un volume absorbé maximal, sont essentiellement égales, la constante (k) de couple correspondant au couple disponible sur l'arbre du moteur hydraulique pour le volume maximal absorbé et à une différence de pression de 1 bar,
caractérisée en ce que
les rapports de transmission (i41, i41a; i42, i42a; i43, i43a; i44, i44a) des liaisons mécaniques (31, 41, 31a, 41a; 32, 42, 32a, 42a; 33, 43, 33a, 43a; 34, 44, 34a, 44a) sont donc différentes les unes des autres en fonction du diamètre de roue, pour au moins une partie des roues entraînées, de telle façon qu'au moins pour cette partie des roues entraînées, le produit concerné, k x i ), de la constante de couple de chaque moteur hydraulique, ou groupe de moteurs hydrauliques, par le rapport de transmission de la liaison mécanique correspondante ait une autre valeur.

2. Transmission hydrostatique suivant la revendication 1, caractérisée en ce qu'au moins pour une partie des moteurs hydrauliques, le volume absorbé peut être modifié, en particulier jusqu'à la valeur zéro, de préférence de façon continue, pendant le fonctionnement en déplacement.

3. Transmission hydrostatique suivant la revendication 1 ou la revendication 2, caractérisée en ce que le débit hydraulique d'au moins une source d'énergie hydraulique (22, 23; 64) peut être modifié, de préférence de façon continue, pendant le fonctionnement en déplacement.

4. Transmission hydrostatique suivant l'une quelconque des revendications 1 à 3, caractérisée en ce qu'à la ou aux roues de chacun des côtés d'un axe d'entraînement, est associé un moteur hydraulique particulier.

5. Procédé pour l'entraînement hydrostatique pour véhicules à plusieurs ponts moteurs suivant l'une quelconque des revendications 1 à 4, dans le cas desquels, en utilisant au moins une source d'énergie hydraulique, au moins deux moteurs hydrauliques sont branchés en parallèle, et les moteurs hydrauliques sont reliés mécaniquement et pour lesquels au moins une partie des moteurs hydrauliques peut être découplée des roues qu'ils entraînent, et pour lequel une partie des moteurs hydrauliques et des liaisons mécaniques associées comportant un rapport de transmission (i), le produit concerné, ( k x i ), de la constante de couple de chaque moteur hydraulique, ou groupe de moteurs hydrauliques, par le rapport de transmission de la liaison mécanique correspondante ait une autre valeur, la constante (k) de couple correspondant au couple disponible sur l'arbre du moteur hydraulique pour le volume maximal absorbé et à une différence de pression de 1 bar,
caractérisé en ce que,
dans le cas d'une demande élevée de puissance et d'un faible besoin de vitesse, tous les moteurs hydrauliques sont d'abord couplés sur la charge et sont entraînés avec leur volume maximal absorbé, le débit hydraulique d'au moins une source d'énergie hydraulique pouvant être modifié essentiellement en continu,
en ce que, lorsque la demande de vitesse augmente et que la charge diminue, le volume absorbé du moteur hydraulique, dans la branche de circuit duquel le produit k x i est le plus grand, est d'abord réduit, de préférence de façon continue et, le cas échéant, ramené à zéro, et en ce que le débit hydraulique devenant disponible de ce fait est envoyé au moteur hydraulique, ou aux moteurs hydrauliques, comportant chaque fois le ou les produits k x i correspondants le ou les plus petits, et
en ce que, si le besoin en vitesse continue à croître, on opère d'une façon correspondante avec les moteurs hydrauliques encore non laminés.
